# EUROPEAN PATENT SPECIFICATION

(11) **EP 0 672 521 B1**
(45) Date of publication and mention of the grant of the patent: **26.05.1999**
(21) Application number: 95301784.5
(22) Date of filing: 17.03.1995
(51) Int. Cl.: B32B 19/06, B32B 27/12, H01B 3/04, H02K 3/32

(54) **Composite thin film insulator, manufacturing method thereof, and electric rotating machines using the composite thin film insulator**
Dünner Verbundfolienisolator, Verfahren zu seiner Herstellung und elektrische Drehmaschinen mit dem Verbundfolienisolator
Isolateur en feuille composite mince, son procédé de fabrication et machine électrique rotative le contenant

(30) Priority: 18.03.1994 JP 48243/94
(43) Date of publication of application: 20.09.1995
(73) Proprietor: Hitachi, Ltd., Chiyoda-ku, Tokyo 101 (JP)
(72) Inventor: Koide, Toshiyuki, Naka-gun, Ibaraki 319-11 (JP); Kano, Ikushi, Naka-gun, Ibaraki 319-11 (JP); Maruyama, Syoichi, Higashishirakawa-gun, Fukushima 979-61 (JP)
(74) Representative: Paget, Hugh Charles Edward

(56) References cited:
- EP-A- 0 406 477
- EP-A- 0 413 179
- WO-A-81/00986
- GB-A- 1 426 575
- International Electrotechnical Commission (IEC) Standard, Bureau Central de la Commission Electrotechnique Internationale, Publication 85, Second edition, Geneva, 1984 pages 3, 7

## Description

### Background of the Invention

### (1) Field of the Invention:

The present invention relates to a composite thin film insulator, a manufacturing method thereof, and electric rotating machines using the composite thin film insulator, for instance, insulating material used as tapes or sheets for insulation between layers of conductors and to the earth in an induction motor, and especially relates to composite thin film insulators using mica.

### (2) Description of the Prior Art:

Conventionally, reconstituted mica tape which is superior in insulating performance is used for insulation between layers and to the earth of coils in electric motors. Mica in the reconstituted mica tape can not be used alone as an insulator because mica itself is inferior in mechanical properties such as bending strength, tensile strength, and elongation. Therefore, mica is used as composite tape reinforced by adhering a backing such as film such as polyester film, unwoven fabrics such as polyester unwoven cloth, or glass cloth, with a binder, as disclosed in, for example, EP-A-413179, EP-A-406477, WO-A-8100986 and GB-A-1426575

Especially, in accordance with current advancements in decreasing size and weight of electric motors, insulating material with improved heat resistance and decreased insulating thickness is required for use in coils. Therefore, reinforced material which is reinforced by adhering plastics film which has high heat resistance and thin insulating thickness is widely used. The reconstituted mica tape with adhered plastics film is generally contained in an iron core slot after being wound around a coil, impregnated with a non-solvent type resin such as epoxy resin, and cured by heating so as to adhere the conductor and the tape, the tapes mutually, and the iron core slot.

Further, in the case of a coil for large size electric motors, semi-cured insulating tape comprising the reconstituted mica, a backing, and a semi-cured binder for adhering is wound around a coil, and subsequently, the semi-cured insulating tape is cured by heating with a heat-pressing machine so as to adhere the conductor and the tape, and the tapes mutually, with the semi-cured binder contained in the insulating tape.

For instance, JP-A-3077203, corresponding to EP-A-413179, discloses such insulating materials for electric rotating machines as described above.

Actually, the reconstituted mica having adhered plastics film backing, which is wound around a coil, forms an insulating layer with the binder, and the materials act effectively against various stresses on the coil. For instance, both the plastics film and the reconstituted mica are effective against electrical stress, the plastics film is effective against mechanical stress, and the plastics film is effective against thermal stress, and integrally the reconstituted mica has a superior performance.

However, among materials which mutually adhere tight with the binder to form the insulating layer, the adhering force between the plastics film and the reconstituted mica is relatively weak, and further, differences in linear thermal expansion coefficients exist among the various materials. Accordingly, the insulating layer has the disadvantage that separation may occur between the plastics film and the reconstituted mica due to repeated heat cycles over a long period of operation.

Even if the degree of separation between the plastics film and the reconstituted mica is small when it first occurs, the separation is deemed to be a problem because the degree of separation grows due to repeating thermal stresses and added mechanical stresses such as vibration of the electric motor, and finally the separation causes breakage of the insulating layer.

### Summary of the Invention

The object of the present invention is to provide a composite thin film insulator, which suffers less or no separation by heat cycles over a long use period and insulation breakage by repeated thermal stress and added mechanical stress, and also to provide a manufacturing method thereof, and electric rotating machines using the composite thin film insulator.

The invention provides a method of manufacturing a composite thin film insulator as set out in claim 1.

The invention further provides a composite thin film insulator as set out in claim 5.

Furthermore, the invention provides an electric rotating machine as set out in claim 7.

In accordance with the present invention, the reconstituted mica and the unwoven cloth sheet can be adhered tightly with a binder, and the unwoven cloth sheet and the plastics material film, the surface of which is smooth and not easily adhered, are mechanically adhered by melting with heating and pressing without a binder. Therefore, the unwoven cloth can be adhered tightly with both the plastics material film and the reconstituted mica.

Accordingly, insulators in a balanced adhering condition can be provided, and superior insulation, in which the insulating layer does not easily separate, can be achieved by using the above insulator of the present invention for coil insulation of electric motors.

### Brief Description of the Drawings

FIG. 1 is a partial perspective view of the composite thin film insulator which is an embodiment of the present invention, and
FIG. 2 is a flow sheet for explaining manufacturing steps of the composite thin film insulator shown in FIG. 1.

### Detailed Description of the Embodiments

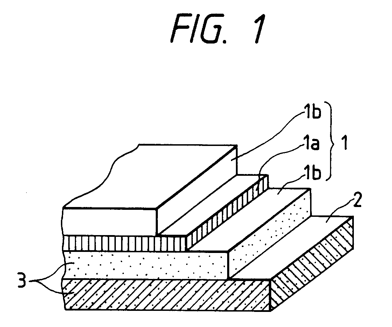

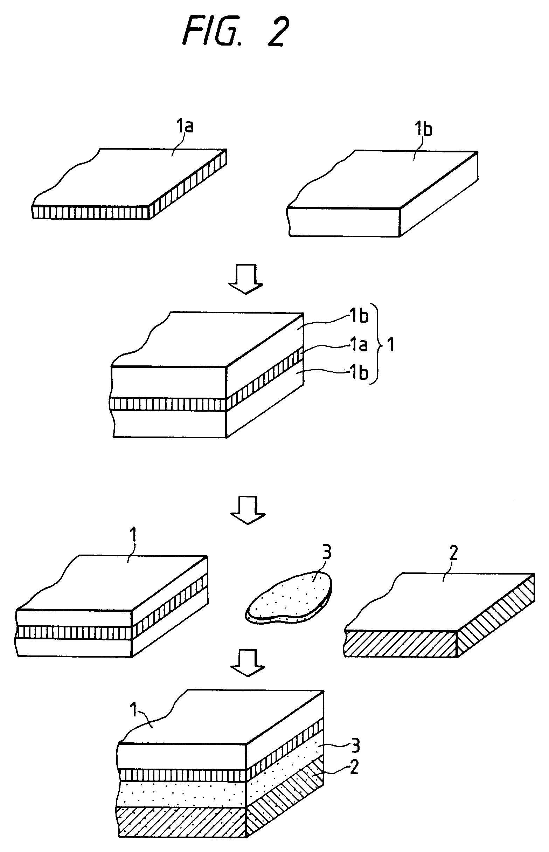

Hereinafter, the present invention is explained in detail referring to the embodiment shown in FIGs. 1 and 2.

FIG. 1 shows an embodiment of the present invention in which polyester film 1a for the plastics film, polyester unwoven cloth sheet 1b for the unwoven cloth sheet, the reconstituted mica 2, and epoxy resin 3 for the binder were used.

As shown in FIG. 1, the composite thin film insulator embodying the present invention comprises polyester film 1a, polyester unwoven cloth sheets 1b adhered by melting to both upper and lower surfaces of the polyester film 1a, and reconstituted mica 2 adhered to a surface of polyester unwoven cloth sheet 1b with epoxy resin 3.

FIG. 2 is a flow sheet indicating manufacturing steps of the composite thin film insulator shown in FIG. 1.

First, a polyester film 1a and polyester unwoven cloth sheets 1b which are lapped at both upper and lower surfaces of the polyester film 1a are laminated by heating and pressing treatment to obtain a laminated sheet 1 of which lapped portions are adhered by melting.

Subsequently, epoxy resin 3 is applied at a surface of one of the polyester unwoven cloth sheets of the laminated sheet 1, a reconstituted mica paper 2 is laid on the epoxy resin carrying surface of the polyester unwoven cloth sheet to impregnate the epoxy resin 3 into both the reconstituted mica paper 2 and the polyester unwoven cloth sheet 1b, and the reconstituted mica paper 2 and the polyester unwoven cloth sheet are adhered together by heat treatment to cure the epoxy resin 3.

Consequently, a composite thin film insulator composed of an integrated body of the laminated sheet 1 and the reconstituted mica paper 2 is formed. After rolling the insulator up, the roll is cut into tapes and sheets having various designated widths depending on their use, and the tapes and sheets are used as insulators between layers and to the earth of coils for electric motors.

Strength against separation occurring between respective adjacent materials (Mica-Unwoven cloth and Film-Unwoven cloth) of the composite thin film insulator manufactured in a manner according to the invention explained above is, as shown in Table 1, approximately 2.5 times the strength of conventional composite polyester film-reconstituted mica paper insulating material (Mica-Film) which has been used for insulation with respect to earth of coils for electric motors, and it reveals that adhesion among materials in the composite thin film insulator embodying the present invention is significantly improved.

**Table 1**

| Material | Bonding method | Strength against separation (relative value) |
|---|---|---|
| Mica - Film | Binder | 100 |
| Mica-Unwoven cloth | Binder | 250 |
| Film-Unwoven cloth | adhering by melting | 350 |

Consequently, when the composite thin film insulator of the present invention is used as an insulator to the earth of a coil for an electric motor, separation between respective materials in the composite thin film insulator and between overlapped portions of the composite thin film insulator due to thermal stress caused by heat cycles such as operation and stop can be prevented.

In the present embodiment, an example of composition materials of thermal classes B - F classes in the thermal resistance classification is illustrated. However, for the plastics films, other films such as polyamide film, polyimide film, polyamide imide film, or composite films wherein other high polymer materials are chemically combined to the above films as a main component can be used. Further, for the unwoven cloth sheet, various unwoven cloths other than polyester fiber which is shown in the present embodiment such as polyamide fiber, glass fiber, or ceramic fiber can be used. As for the binder, silicone resin, polyimide resin, or unsaturated polyester resin and the like can be used. The above described materials can be used in various combinations depending on conditions such as the thermal resistance classification, or the use environment.

By using the composite thin film insulator explained in the above embodiment for insulation of electric rotating machines, such as for insulating among layers or with respect to earth of stator coils and rotator coils, a superior insulator having a strong adhesion strength against thermal stresses caused by heat cycles can be provided.

In the invention, because the reconstituted mica and the unwoven cloth sheet are adhered tightly with a binder, and the unwoven cloth sheet and plastics material film, the surface of which is smooth and hard to adhere, are adhered mechanically by melting with heating and pressing without using a binder, the unwoven cloth sheet can be tightly adhered to both plastics material film and the reconstituted mica. Therefore, no separation is generated even by heat cycles during a long operation period, and no breakage of insulation occurs even if repeated thermal stresses and mechanical stresses are added. Accordingly, the composite thin film insulator of the present invention is very effective in use as an insulator.

## Claims

1. A method for manufacturing a composite thin film insulator comprising the steps of;
adhering an unwoven cloth sheet (1b) at each of upper and lower surfaces of a plastics material film (1a) by melting to form a laminated sheet (1), and
adhering a mica sheet (2) at a surface of one of said unwoven cloth sheets (1b) of the laminated sheet (1) with a binder (3).

2. A method according to claim 1, comprising the steps of;
lapping said unwoven cloth sheets (1b) at the upper and lower surfaces of the plastics material film (1a),
heating and pressing said plastics material film (1a) lapped with said unwoven cloth sheets (1b) to form said laminated sheet (1) by mutual adhesion due to melting,
applying a heat-curable resin (3) as a binder at a surface of at least one of (i) one of said unwoven cloth sheets (1b) of the laminated sheet (1) and (ii) said mica sheet (2),
joining the unwoven cloth sheet (1b) and the mica sheet (2) together by means of the resin (3), with impregnation of the resin (3) into both the unwoven cloth sheet (1b) and the mica sheet (2), and
adhering the unwoven cloth sheet (1b) and the mica sheet (2) together by heating the resin (3) to cure it.

3. A method according to claim 1 or 2, wherein
said plastics material film (1a) is composed of an insulating material selected from polyester, polyamide, polyimide, polyamide-imide, or is a composite film having a main body of polyester, polyamide, polyimide or polyamide-imide which is chemically combined with another high polymer material,
said unwoven cloth sheet (1b) is an insulating unwoven cloth sheet composed of any one of polyester fibre, polyamide fibre, glass fibre and ceramic fibre,
said mica sheet (2) is composed of reconstituted mica foil, and
said binder (3) is an adhesive material composed of any one of epoxy resin, silicone resin, unsaturated polyester resin and polyimide resin.

4. A method according to claim 1 or 2, wherein
said binder (3) to adhere the laminated sheet (1) and the mica sheet (2) is cured to form an integrated insulator in either a dry condition wherein said resin is cured completely, or a semi-cured condition wherein said resin is cured incompletely.

5. A composite thin film insulator composed of
a plastics material film (1a),
unwoven cloth sheets (1b) adhered to each of upper and lower surfaces of said plastics material film (1a) by melting, and
a mica sheet (2) which is adhered to a surface of one of said unwoven cloth sheets (1b) by a binder.

6. A composite thin film insulator according to claim 5, wherein
said plastics material film (1a) is composed of an insulating material selected from polyester, polyamide, polyimide, polyamide-imide, or is a composite film having a main body of polyester, polyamide, polyimide or polyamide-imide which is chemically combined with another high polymer material,
said unwoven cloth sheet (1b) is an insulating unwoven cloth sheet composed of any one of polyester fibre, polyamide fibre, glass fibre and ceramic fibre,
said mica sheet (2) is composed of reconstituted mica foil, and
said binder (3) is an adhesive material composed of any one of epoxy resin, silicone resin, unsaturated polyester resin and polyimide resin.

7. An electric rotating machine comprising
a stator,
a stator coil arranged in a slot of said stator,
a rotor coil arranged in a rotor slot at a location so as to cooperate magnetically with said stator coil, and
a rotor supported in a rotatable manner in a concentric relationship with said stator,
characterised by
composite thin film insulator material composed of a plastics material film (1a),
unwoven cloth sheets (1b) adhered to each of upper and lower surfaces of said plastics material film (1a) by melting, and
a mica sheet (2) which is adhered to a surface of one of said unwoven cloth sheets (1b) by a binder (3),
said insulator material insulating between layers and with respect to earth of at least one of said stator coil and said rotator coil.

## Patentansprüche

1. Verfahren zur Herstellung eines dünnen Verbundfilmisolators, folgende Schritte umfassend:
das Kleben einer Nonwoven-Textilbahn (1b) auf jede aus der Deck- und Unterfläche eines Films (1a) aus Kunststoffmaterial durch Schmelzen, um eine Laminatbahn (1) zu bilden, und
das Kleben einer Glimmerbahn (2) an eine Oberfläche einer der Nonwoven-Textilbahnen (1b) der Laminatbahn (1) mit einem Bindemittel (3).

2. Verfahren nach Anspruch 1, folgende Schritte umfassend:
das Überlappen der Nonwoven-Textilbahnen (1b) an der Deck- und der Unterfläche des Kunststoffmaterialfilms (1a),
das Erhitzen und Pressen des Kunststoffmaterialfilms (1a), der mit den Nonwoven-Textilbahnen (1b) überlappt ist, um die Laminatbahn (1) durch gegenseitiges Ankleben durch Schmelzen zu bilden,
das Auftragen eines wärmehärtbaren Harzes (3) als Bindemittel auf eine Oberfläche von zumindest einem aus (i) einer der Nonwoven-Textilbahnen (1b) der Laminatbahn (1) und (ii) der Glimmerbahn (2),
das Verbinden der Nonwoven-Textilbahn (1b) und der Glimmerbahn (2) mittels des Harzes (3) mit Imprägnieren des Harzes (3) sowohl in die Nonwoven-Textilbahn (1b) als auch die Glimmerbahn (2), und
das Zusammenkleben der Nonwoven-Textilbahn (1b) und der Glimmerbahn (2) durch Erhitzen des Harzes (3), um es zu härten.

3. Verfahren nach Anspruch 1 oder 2, worin
der Kunststoffmaterialfilm (1a) aus einem Isoliermaterial besteht, das aus Polyester, Polyamid, Polyimid, Polyamidimid ausgewählt ist, oder ein Verbundfilm ist, der einen Hauptkörper aus Polyester, Polyamid, Polyimid oder Polyamidimid aufweist, der chemisch mit einem anderen Hochpolymermaterial kombiniert ist,
wobei die Nonwoven-Textilbahn (1b) eine Nonwoven-Isoliertextilbahn ist, die aus einem aus Polyesterfaser, Polyamidfaser, Glasfaser und Keramikfaser besteht,
wobei die Glimmerbahn (2) aus rekonstituierter Glimmerfolie besteht, und
das Bindemittel (3) ein Klebermaterial ist, das aus einem aus Epoxyharz, Silikonharz, ungesättigtem Polyesterharz und Polyimidharz besteht.

4. Verfahren nach Anspruch 1 oder 2, worin
das Bindemittel (3) zum Kleben der Laminatbahn (1) und der Glimmerbahn (2) gehärtet wird, um einen einstückigen Isolator entweder in einem trockenen Zustand, worin das Harz vollständig gehärtet ist, oder in einem halbgehärteten Zusand zu bilden, worin das Harz unvollständig gehärtet ist.

5. Dünner Verbundfilmisolator, bestehend aus:
einem Kunststoffmaterialfilm (1a),
Nonwoven-Textilbahnen (1b), die durch Schmelzen jeweils an die Deck- und die Unterfläche des Kunststoffmaterialfilms (1a) geklebt sind, und
einer Glimmerbahn (2), die durch ein Bindemittel an eine Oberfläche einer der Nonwoven-Textilbahnen (1b) geklebt ist.

6. Dünner Verbundfilmisolator nach Anspruch 5, worin
der Kunststoffmaterialfilm (1a) aus einem Isolationsmaterial besteht, das aus Polyester, Polyamid, Polyimid, Polyamidimid ausgewählt ist oder ein Verbundfilm ist, der einen Hauptkörper aus Polyester, Polyamid, Polyimid oder Polyamidimid aufweist, der chemisch mit einem anderen Hochpolymermaterial kombiniert ist,
wobei die Nonwoven-Textilbahn (1b) eine Nonwoven-Isoliertextilbahn ist, die aus irgendeinem aus Polyesterfaser, Polyamidfaser, Glasfaser und Keramikfaser besteht,
wobei die Glimmerbahn (2) aus rekonstituierter Glimmerfolie besteht, und
das Bindemittel (3) ein Klebermaterial ist, das aus einem aus Epoxyharz, Silikonharz, ungesättigtem Polyesterharz und Polyimidharz besteht.

7. Elektrische Rotationsmaschine, umfassend:
einen Stator
eine Statorspule, die in einem Schlitz des Stators angeordnet ist,
eine Rotorspule, die in einem Rotorschlitz an einer solchen Position angeordnet ist, daß sie magnetisch mit der Statorspule kooperiert, und
einen Rotor, der drehbar in einer konzentrischen Beziehung mit dem Stator gehalten wird,
gekennzeichnet durch
dünnes Verbundfilmisolatormaterial, bestehend aus einem Kunststoffmaterialfilm (1a), Nonwoven-Textilbahnen (1b), die durch Schmelzen an jede der Deck- und der Unterfläche des Kunststoffmaterialfilms (1a) geklebt sind, und
einer Glimmerbahn (2), die durch ein Bindemittel (3) an eine Oberfläche einer der Nonwoven-Textilbahnen (1b) geklebt ist,
wobei das Isolatormaterial zwischen Schichten und in bezug auf Masse zumindest einer aus der Statorspule und der Rotatorspule isoliert.

## Revendications

1. Méthode de fabrication d'un isolateur en film mince composite, comprenant les étapes de:
faire adhérer une feuille en étoffe non tissée (1b) à chacune des surfaces supérieure et inférieure d'un film en matière plastique (1a) par fusion pour former une feuille stratifiée (1), et
faire adhérer une feuille de mica (2) à une surface de l'une desdites feuilles d'étoffe non tissée (1b) de la feuille stratifiée (1) avec un liant (3).

2. Méthode selon la revendication 1, comprenant les étapes de :
poser à recouvrement lesdites feuilles d'étoffe non tissée (1b) aux surfaces supérieure et inférieure du film en matière plastique (1a),
chauffer et presser ledit film de matière plastique (1a) recouvert desdites feuilles d'étoffe non tissée (1b) pour former ladite feuille stratifiée (1) par adhérence mutuelle due à la fusion,
appliquer une résine thermodurcissable (3) comme liant à une surface d'au moins l'une de (i) l'une desdites feuilles d'étoffe non tissée (1b) de la feuille stratifiée (1) et (ii) ladite feuille de mica (2),
joindre la feuille d'étoffe non tissée (1b) et la feuille de mica (2) l'une à l'autre au moyen de la résine (3) avec imprégnation de la résine (3) dans la feuille d'étoffe non tissée (1b) et la feuille de mica (2), et
faire adhérer la feuille d'étoffe non tissée (1b) et la feuille de mica (2) ensemble par chauffage de la résine (3) pour la durcir.

3. Méthode selon la revendication 1 ou 2, où
ledit film de matière plastique (1a) se compose d'une matière isolante sélectionnée parmi le polyester, le polyamide, le polyimide, le polyamide-imide, ou est un film composite ayant un corps principal de polyester, polyamide, polyimide ou polyamide-imide qui est chimiquement combiné avec un autre matériau de polymère haut,
ladite feuille d'étoffe non tissée (1b) est une feuille d'étoffe non tissée isolante composée de l'une d'une fibre de polyester, d'une fibre de polyamide, d'une fibre de verre et d'une fibre de céramique,
ladite feuille de mica (2) se compose d'une feuille de mica reconstitué, et
ledit liant (3) est une matière adhésive composée de l'une d'une résine époxy, d'une résine de silicone, d'une résine de polyester insaturé et d'une résine de polyimide.

4. Méthode selon la revendication 1 ou 2, où ledit liant (3) pour faire adhérer la feuille stratifiée (1) et la feuille de mica (2) est durci pour former un isolateur intégré soit en condition sèche où ladite résine est complètement durcie ou en condition semi-durcie où ladite résine est incomplètement durcie.

5. Isolateur en film mince composite composé de
un film de matière plastique (1a)
des feuilles d'étoffe non tissée (1b) adhérant à chacune des surfaces supérieure et inférieure dudit film de matière plastique (1a) par fusion, et
une feuille de mica (2) qui adhère à une surface de l'une desdites feuilles d'étoffe non tissée (1b) par un liant.

6. Isolateur en film mince composite selon la revendication 5, où
ledit film en matière plastique (1a) se compose d'une matière isolante sélectionnée parmi le polyester, le polyamide, le polyimide, le polyamide-imide ou est un film composite ayant un corps principal de polyester, polyamide, polyimide ou polyamide-imide qui est chimiquement combiné avec un autre matériau de polymère haut,
ladite feuille d'étoffe non tissée (1b) est une feuille d'étoffe non tissée isolante composée de l'une d'une fibre de polyester, d'une fibre de polyamide, d'une fibre de verre et d'une fibre de céramique,
ladite feuille de mica (2) se compose d'une feuille de mica reconstitué, et
ledit liant (3) est une matière adhésive composée de l'une d'une résine époxy, d'une résine de silicone, d'une résine de polyester insaturé et d'une résine de polyimide.

7. Machine rotative électrique comprenant
un stator,
une bobine de stator agencée dans une fente dudit stator,
une bobine de rotor agencée dans une fente de rotor en un emplacement afin de coopérer magnétiquement avec ladite bobine de stator, et
un rotor suppporté d'une manière rotative en relation concentrique avec ledit stator;
caractérisée par
un matériau isolant en film mince composite composé de
un film de matière plastique (1a),
des feuilles d'étoffe non tissée (1b) adhérant à chacune des surfaces supérieure et inférieure dudit film de matière plastique (1a) par fusion, et
une feuille de mica (2) qui adhère à une surface de l'une desdites feuilles d'étoffe non tissée (1b) par un liant (3),
ledit matériau isolant entre les couches et par rapport à la terre d'au moins l'une de ladite bobine de stator et de ladite bobine de rotor.
